# EUROPÄISCHE PATENTANMELDUNG

(11) **EP 0 891 952 A1**
(43) Veröffentlichungstag der Anmeldung: **20.01.1999**
(21) Anmeldenummer: 98112514.9
(22) Anmeldetag: 07.07.1998
(51) Int. Cl.: C02F 9/00, B01J 49/00, B01J 47/00

(54) **Einrichtung für die Anzeige der Erschöpfung eines Reinigungsmittels**

(30) Priorität: 19.07.1997 DE 19731092
(71) Anmelder: Brita Wasser-Filter-Systeme GmbH, D-65232 Taunusstein-Neuhof (DE)
(72) Erfinder: Hofmann, Uwe, 65321 Heidenrod (DE); Sauerbier, Knut, 64658 Fürth (DE)
(74) Vertreter: Weber, Dieter, Dr.

(57) **Zusammenfassung**

Beschrieben wird eine Einrichtung zur Anzeige der Erschöpfung eines in einem Einsatz einer Wasserreinigungsvorrichtung (7) enthaltenen Reinigungsmittels.

Um eine solche Einrichtung besser herzustellen, technisch zu verbessern, verbraucherfreundlicher und auch preiswerte auszugestalten, ist erfindungsgemäß vorgesehen, daß ein Anzeigegerät (1) angeordnet ist, um dem Verbraucher die Erschöpfung des Reinigungsmittels in Abhängigkeit von der Menge des durch das Reinigungsmittel durchgelaufenden Wassers anzuzeigen; oder um alternativ dem Verbraucher die Erschöpfung in Abhängigkeit von der Menge des durch das Reinigungsmittel durchgelaufenen Wassers und von der Zeit anzuzeigen; wobei vorzugsweise das Anzeigegerät mit einer Anordnung verbunden ist, die an einem relativ zum Einsatz bewegbaren Teil (3) angebracht ist und bei dieser Bewegung einen Schaltvorgang auslöst.

## Beschreibung

Die Erfindung betrifft eine Einrichtung für die Anzeige der Erschöpfung eines in einem Einsatz einer Wasserreinigungsvorrichtung enthaltenen Reinigungsmittels.

Es war schon lange Zeit das Problem, die Erschöpfung von Reinigungsmaterial in einer Wasserreinigungsvorrichtung zu messen oder möglichst sogar anzuzeigen, denn für eine gute Reinigungsfunktion sollte das häufig auf Ionenaustauscherbasis arbeitende Reinigungsmittel von Zeit zu Zeit regeneriert oder erneuert werden. Zur Lösung dieses Problems hat man chemische Erschöpfungsanzeigen entwickelt, welche zum Beispiel durch einen Farbumschlag eines Indikators dem Verbraucher die Erschöpfung des in einem Einsatz enthaltenen Reinigungsmittels anzeigen sollte. Man hat auch schon versucht, mechanische Mittel dem Endverbraucher an die Hand zu geben, mit deren Hilfe dieser erkennen soll, wann das Reinigungsmittel in dem Einsatz bzw. der Patrone erschöpft ist. Hier verwenden bekannte Wasserreinigungsvorrichtungen separate, auf den Einsatz aufsteckbare Lochscheiben mit zum Beispiel einem Loch pro Monat eines Jahres. Der Endverbraucher kann zu Beginn der Inbetriebnahme einen Zeiger auf ein bestimmtes Loch stecken, um sich selbst daran zu erinnern, wann spätestens das Reinigungsmittel in dem Einsatz erschöpft sein dürfte. Eine echte Anzeige aufgrund einer Messung war dies aber nicht.

Andere Herstellerfirmen haben elektronische Anzeigeeinrichtungen in Wandungen ihrer Wasserreinigungseinrichtung eingebaut und je nach abgelaufener Zeit eine teilweise bzw. vollständige Erschöpfungsanzeige vorgesehen, zum Beispiel durch Blinken oder Leuchten eines Anzeigefeldes. Es hat sich aber gezeigt, daß bei bestimmten Anwendungsfällen in verhältnismäßig kurzer Zeit eine große Menge Wasser durch den Einsatz hindurchlaufen gelassen wird. Die Folge ist, daß das Reinigungsmittel durch starke funktionelle Beanspruchung schneller erschöpft als zeitlich geschätzt wird. Vor dem zeitlichen Ablauf ist daher durch starke Benutzung das Reinigungsmittel bereit erschöpft, ohne daß die gewünschte Anzeige erfolgt. Daher hat man schon mechanische Zählvorrichtungen geschaffen, die nach jeweiligem Öffnen und Schließen des Deckels auf dem Trichter einer Wasserreinigungsvorrichtung ein Zählrad betätigen, so daß der Endverbraucher aus der Anzahl der Öffnungen des Deckels einen Schluß auf die gereinigte Wassermenge ziehen und das Reinigungsmittel entsprechend frühzeitig austauschen konnte. Solche mechanischen Zähleinrichtungen sind aber anfällig, kompliziert und teuer.

Der Erfindung liegt daher die Aufgabe zugrunde, eine Anzeigeeinrichtung der eingangs genannten Art zu schaffen, die besser herzustellen, technisch verbessert, verbraucherfreundlicher und auch preiswerter ist.

Diese Aufgabe wird erfindungsgemäß dadurch gelöst, daß ein Anzeigegerät angeordnet ist, um dem Verbraucher die Erschöpfung des Reinigungsmittels in Abhängigkeit von der Menge des durch das Reinigungsmittel durchgelaufenen Wassers anzuzeigen. Das neue Anzeigegerät ist nicht mehr mechanisch aufgebaut und daher preiswerter herstellbar und technisch vereinfacht, weil es insbesondere bei einer bevorzugten Ausführungsform elektronisch arbeitet. Dadurch ist die neue Anzeigeeinrichtung verbraucherfreundlicher.

Unbeachtlich von der Ausgestaltung des Anzeigegerätes, d.h. ob es elektronisch oder mechanisch aufgebaut ist, kann man bei Weiterbildung der Erfindung mit dem Anzeigegerät dem Verbraucher die Erschöpfung des Reinigungsmittels nicht nur in Abhängigkeit von der Menge des durchgelaufenen Wassers sondern auch in Abhängigkeit von der Zeit anzeigen. Diese Kombination der Messung von Zeit und Wassermenge, um daraus Schlüsse auf den Erschöpfungsgrad des Reinigungsmittels zu ziehen, ist im Stand der Technik deshalb unbekannt, weil die Berücksichtigung beider Parameter, nämlich der abgelaufenen Zeit und der behandelten Wassermenge dem Verbraucher nicht für möglich erscheint. Diese Kombination ist nun aber erfindungsgemäß gelungen, ohne einen zu großen technischen Herstellungsaufwand zu betreiben.

Insbesondere ist man gemäß der Erfindung den Weg gegangen, daß das Anzeigegerät mit einer Anordnung verbunden ist, die an einem relativ zum Einsatz bewegbaren Teil angebracht ist und bei dieser Bewegung einen Schaltvorgang auslöst. Durch das Bewegen eines von dem Einsatz (mit dem Reinigungsmittel) getrennten und gegenüber diesem verschiebbaren Teiles, zum Beispiel durch das Bewegen des Deckels, eines Schiebers, einer Nachfülleinrichtung oder dergleichen, ist es möglich, durch die Verwendung der erfindungsgemäßen Anordnung einen Schaltvorgang auszulösen, der wiederum eine Anzeige in der erfindungsgemäßen Einrichtung bewirkt. Anders als mechanische Eingriffe, welche eine aufwendige Herstellung mit großer Präzision voraussetzen und dem Abrieb unterworfen sind, ist ein Schaltvorgang bekanntlich ohne die Bewegung mechanischer Teile möglich; insbesondere, wenn man eine elektrische Anordnung verwendet, die gleichzeitig auch eine Anzeige bewirkt. Ersichtlich ist eine solche Anzeigeeinrichtung einfacher, robuster und wird von dem Endverbraucher bevorzugt.

Es ist auch eine weitere alternative Ausführungsform der erfindungsgemäßen Einrichtung dahingehend möglich, daß der Schaltvorgang durch die Bewegung zweier anderer Teile der Vorrichtung relativ zueinander ausgelöst wird, sofern deren Bewegung für das Lösen einer Befüllungsöffnung notwendig ist. Zum Beispiel könnte ein Deckel auf einem Durchlaufbehälter durch einen Riegel durch Drehen oder Schieben entsperrt und danach abgehoben werden. Befindet sich das Anzeigegerät dann auf dem Riegel oder auf dem Deckel, könnte der Schaltvorgang durch die Bewegung des Deckels oder des Riegels relativ zu dem jeweils anderen Teil auslösbar sein.

Dabei ist es besonders günstig, wenn erfindungsgemäß die Anordnung in dem Anzeigegerät integriert ist. Die Unterbringung einer solchen Anzeigeeinrichtung ist auf sehr keinem Raum möglich und unterscheidet sich daher von den bisher bekannten mechanischen Einrichtungen nicht nur vom Komfort sondern auch vom Grundsatz her hinsichtlich Aufgabe und auch hinsichtlich Lösung. Das Anzeigegerät ist bevorzugt eine elektrisches bzw. elektronisches Gerät mit den an sich bekannten, mit geringstem Raumaufwand herstellbaren Chips, elektrischen Schaltungen, Schaltern und dergleichen.

Auf sehr keinem Raum gibt es zeitabhängige Steuerungen, die nach Ablauf bestimmter Zeitperioden Teilanzeigen und danach Vollanzeigen geben, anhand deren der Verbraucher erkennen kann, daß das Reinigungsmittel erschöpft ist. Das Besondere gemäß der Erfindung ist nun, daß mit dem elektronischen Anzeigegerät gemäß der Erfindung nicht nur der Zeitablauf sondern - kombiniert mit diesem Ablauf - außerdem und zusätzlich die Menge von durch das Reinigungsmittel durchgelaufenem Wasser gemessen und deren Ergebnis angezeigt wird. Diese Messung erfolgt zwar indirekt über die Bewegung mechanischer Teile zueinander, gleichwohl zuverlässig und recht genau der tatsächlichen Wassermenge angenähert. Als bewegliches Teil wurde vorstehend zum Beispiel ein Schieber genannt. Dieser kann beispielsweise die Zufuhr zu dem mit dem Reinigungsmittel gefüllten Einsatz versperren bzw. nach Zurückschieben in eine geöffnete Stellung den Zugang freigeben. Nimmt man eine bestimmte Wassermenge an, welche nach einmaligem Öffnen vor dem nachfolgenden Verschließen durch den gefüllten Einsatz hindurchgegossen wird, zum Beispiel 1 Liter oder alternativ 2 Liter, dann kann man das einmalige Öffnen des Schiebers mit nachfolgendem Verschließen als den Durchlauf einer bestimmten Wassermenge eichen. Weil durch diesen Schiebevorgang ein Schalten in dem elektronischen Anzeigegerät ausgelöst worden ist, bedeutet diese Schaltung das Durchlaufen der bestimmten Wassermenge, die dann sogleich angezeigt werden kann.

Alle Teile in einer Wasserreinigungsvorrichtung, welche gegenüber dem mit Reinigungsmittel gefüllten Einsatz bewegbar sind, sind als Signalgeber vorstellbar. Durch "Und" und/oder "Oder"-Schaltungen läßt sich die Zeitmessung mit der Mengenmessung elektronisch in an sich bekannter Weise kombinieren. Diese Maßnahme macht sich auch die vorliegende Erfindung zunutze, so daß in realistischer Weise durch das erfindungsgemäße Anzeigegerät die Erschöpfung des Reinigungsmittels in Abhängigkeit sowohl von der Zeit als auch von der durchgelaufenen Wassermenge erfaßt und sogar angezeigt werden kann.

Bei einer bevorzugten Ausführungsform ist erfindungsgemäß dabei vorgesehen, daß die Anordnung des Anzeigegerätes einen Reedschalter aufweist und daß an dem mit dem Einsatz verbundenen Teil ein Magnet befestigt ist. Das mit dem Einsatz verbundene Teil kann entweder zum Gehäuse gehören, kann zum Beispiel ein mit dem Einsatz in Verbindung stehender Trichter sein, kann alternativ auch ein Griff am Auffangbehälter oder jedes entsprechende andere Teil sein, an dem bequem und technisch einfach ein Magnet befestigbar ist, der bei Annähern bzw. sich Entfernen von dem Reedschalter den vorstehend erwähnten Schaltvorgang auslösen kann. Es ist bekannt, sehr klein bemessene Reedschalter zu verwenden, wenn geringe Leistungen für die gewünschten Funktionen ausreichen. Wenn es sich um einen elektrischen Impuls oder auch die Anzeige des Feldes eines Anzeigegerätes oder einer Lichtquelle, zum Beispiel eines LCD handelt, genügen sehr geringe elektrische Leistungen und sehr kleine Reedschalter.

Gemäß der Erfindung ist zwar davon ausgegangen, daß das Anzeigegerät mit seiner elektronischen Anordnung in dem bewegbaren Teil, zum Beispiel im Deckel, angeordnet ist, während der Magnet in dem mit dem Einsatz verbundenen Teil angebracht ist. Gleichwohl kann die Lehre gemäß der Erfindung aber auch dann eingesetzt werden, wenn die beiden für die Schaltung erforderlichen Elemente jeweils ausgetauscht werden. Gemeint ist damit, daß der Magnet auch im beweglichen Teil angeordnet wird, zum Beispiel im Deckel oder in dem schon beschriebenen Schieber. Es versteht sich, daß man das Anzeigegerät auch an dem mit dem Einsatz verbundenen Teil befestigen kann.

Besonders vorteilhaft hat es sich bei einer bevorzugten Ausführungsform der Erfindung allerdings erwiesen, wenn der Einsatz der Wasserreinigungsvorrichtung an einem in einem Auffangbehälter gestützten Trichter gehalten ist, an welchem der Magnet befestigt ist, und wenn das Anzeigegerät an dem Deckel der Wasserreinigungsvorrichtung angebracht ist. Die Abmessungen des Anzeigegerätes sind kleiner auszugestalten als die Fingerkuppe eines erwachsenen Menschen. Daraus erkennt man schon die günstigen Möglichkeiten, das Anzeigegerät an dem gegenüber dem Einsatz beweglichen Teil, zum Beispiel an dem Deckel, anzuordnen, während im Griff, in dem erwähnten Trichter oder an einer anderen Wandung der erfindungsgemäßen Wasserreinigungsvorrichtung der Magnet angebracht wird.

Weiterhin ist es vorteilhaft, wenn erfindungsgemäß der Magnet sich in Form eines Bandes um den Umfang des den Deckel tragenden Trichters erstreckt. Dieses Band kann vorzugsweise oben am Rand des Trichters in einem Absatz störungsfrei gehalten und einwandfrei befestigt werden. Der Vorteil der Bandform liegt darin, daß dann auf dem gesamten Umfang des Trichterrandes eine für das Schalten erforderliche Magnetkraft zur Verfügung steht mit der Folge, daß man einen nicht verdrehgesicherten Deckel auf den Trichterrand in beliebiger Winkelstellung aufsetzen kann mit der Folge, daß die Wechselwirkung zwischen Magnet und Anzeigegerät jederzeit und bei aufgesetztem Deckel zuverlässig und drehunabhängig erfolgt. Anstelle des Magneten in Form eines Bandes oder eines Streifens, gegebenenfalls auch Kabels, kann man ebenso gut einen Kranz von Einzelmagneten am Trichter anordnen und die gleichen Vorteile erreichen wie bei der Verwendung einer Band- oder Streifenform des Magneten.

Wenn man bei einer anderen bevorzugten und alternativen Ausführungsform dem Magneten die Form eines Bolzens, Blättchens oder Quaders gibt, kann man auf die Bandform und damit die Verwendung einer größeren Menge Magnetmaterial verzichten, wenn man erfindungsgemäß vorsteht, daß dann der Deckel und/oder der Trichter ein Zentriermittel aufweist, zum Beispiel Noppen, eine Nut-/Federverbindung, Vorsprünge, die mit Ausnehmungen wechselwirken usw. Häufig weist der Auffangbehälter eine Ausgießtülle auf, und wenn am Deckel Maßnahmen für das Zusammenpassen einer Deckelstelle mit der Ausgießtülle getroffen sind, ist automatisch eine Zentrierung des Deckels vorgesehen. Das Anzeigegerät kann dann beispielsweise der Ausgießtülle gegenüberliegend in der Nähe des Griffes des Auffangbehälters angeordnet sein. Der Magnet in Form eines Quaders oder Bolzens kann dann zum Beispiel im Griff, in der Außenwand des Auffangbehälters, im Randbereich des Trichters oder einer anderen mit dem Einsatz verbundenen Wandung angeordnet sein.

Die Form und Größe des Magneten ändert sich entsprechend dem Abstand zwischen dem Anzeigegerät bzw. seinem Reedschalter und dem Magneten. Größere Magneten erlauben die Anordnung des Anzeigegerätes in einem größeren Abstand vom Magneten und umgekehrt. Vergrößert man den Nullabstand, d.h. denjenigen Abstand, bei welchem der Ruhezustand des Reedschalters gegeben ist, bewegen sich die Blättchen oder Schaltzungen des Reedschalters in die jeweils andere Stellung (Schaltvorgang), so daß dadurch der elektrische Impuls in dem elektronischen Anzeigegerät zur Verfügung steht, um eine Zählung durchzuführen und diese auch anzuzeigen.

Eine bevorzugte Ausführungsform der Erfindung ist dadurch gekennzeichnet, daß bei auf der Wasserreinigungsvorrichtung aufgesetztem Deckel der Magnet von dem Reedschalter einen Abstand von 1 mm bis 30 mm, vorzugsweise 5 mm bis 10 mm, hat. In diesen Größenordnungen lassen sich die preisgünstigsten und technisch am zweckmäßigsten zu handhabenden Teile einbauen, schalten und benutzen.

Dabei kann man erfindungsgemäß ferner ein Anzeigegerät benutzen, welches eine Sichtscheibe mit mehreren, nebeneinander angeordneten Anzeigefeldern und vorzugsweise einer Rücksetztaste aufweist. Vor Inbetriebnahme der Anzeigeeinrichtung der Erfindung kann Energie gespart werden, so lange zum Beispiel das Gerät unverkauft in einem Lager steht. Nach Kauf kann der Verbraucher durch Betätigung der Rücksetztaste das Anzeigegerät aktivieren und die gewünschten Funktionen durch Betrachten der Anzeigefelder verfolgen. Durch eine durchsichtige Scheibe, eine Platte, eine Tafel oder dergleichen als Sichtscheibe sind ein oder mehrere Anzeigefelder die Informationsträger, wenn sie sichtbar sind, blinken oder unsichtbar sind. Anstelle von Anzeigefeldern können auch digitale Leuchtdioden verwendet werden. Die einzelnen Elemente der erfindungsgemäßen Einrichtung werden vorteilhaft der Form des jeweiligen Wasserreinigungsgerätes angepaßt. Die Zeiteinheiten und/oder Einheiten für zum Beispiel durch den Einsatz mit dem Reinigungsmittel durchlaufen gelassene Wassermengen können je nach Wunsch des Verbrauchers und Anwendungszweck auf Tage, Wochen, Monate oder Jahre bzw. Anzahl Liter Flüssigkeit eingestellt werden.

Weitere Vorteile, Merkmale und Anwendungsmöglichkeiten der vorliegenden Erfindung ergeben sich aus der folgenden Beschreibung eines bevorzugten Ausführungsbeispiels in Verbindung mit den anliegenden Zeichnungen. Es zeigen:
- Figur 1: im Querschnitt eine Wasserreinigungsvorrichtung mit Deckel und von diesem abgedecktem Trichter,
- Figur 2: eine abgebrochene und vergrößert dargestellte Einzelheit der Wasserreinigungsvorrichtung der Figur 1 im Bereich des Deckels und Trichterrandes rechts oben,
- Figur 3: eine Draufsicht auf die Wasserreinigungsvorrichtung der Figur 1, wenn man von oben auf den Deckel und den Griff blickt,
- Figur 4: vergrößert die Einzelheit der Figur 3, die neben dem Griff links abgebrochen dargestellt ist,
- Figur 5: eine Draufsicht auf das vergrößert und genauer herausgezeichnete Anzeigegerät und
- Figur 6: eine Draufsicht auf den Deckel von unten, wenn der Trichter und der Wasserauffangbehälter weggelassen sind.

Die allgemein mit 7 bezeichnete Wasserreinigungsvorrichtung besteht aus einem Wasserauffangbehälter 8 mit Ausgießtülle 9 am vorderen Ende und Griff 10 am hinteren Ende.

Im Inneren des Wasserauffangbehälters 8 ist von oben her ein allgemein mit 11 bezeichneter Trichter eingesetzt, der nach unten zur Mitte eine Hülse 12 aufweist, in die ein hier nicht näher gezeichneter Einsatz mit Reinigungsmittel eingesetzt werden kann. Letzterer ist oben und unten mit einem Siebboden versehen, so daß granulatförmiges Reinigungsmittel darin untergebracht werden kann. Der Einsatz hat etwa die Größe der Hülse 12, wenngleich sein Oberboden auch etwas in den oberen erweiterten Teil des Trichters 11 ragen kann. Auf dem Rand 13 des Trichters 11 ist ein den gesamten Trichter 11 verschließender Deckel 3 abnehmbar aufgesetzt. Er übergreift den oberen Rand 13 des Trichters 11 und ist kreisringförmig mit einem in der Mitte angeordneten Greifknopf 14.

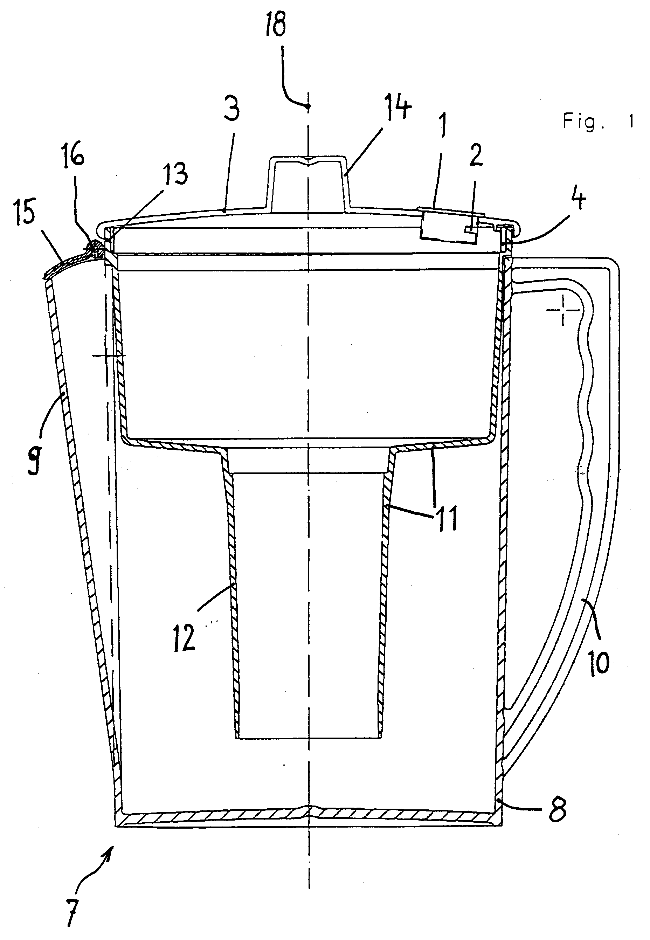

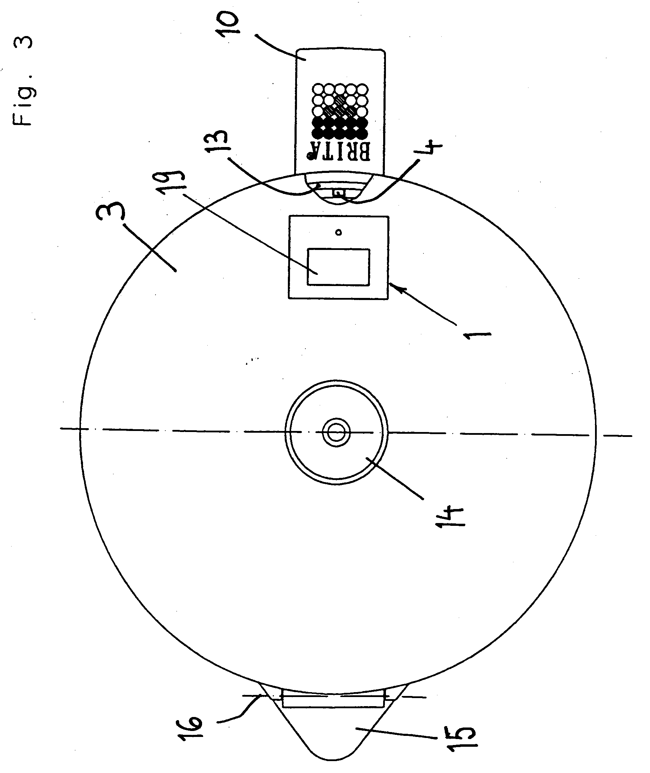

Die mit dem Wasserauffangbehälter 8 einstückig ausgestaltete Ausgießtülle 9 wird von einer frei schwenkbaren Klappe 15 abgedeckt, deren Schwenkachse 16 in Figur 1 links oben als Kreuzpunkt und in Figur 3 als gestrichelte Linie dargestellt ist.

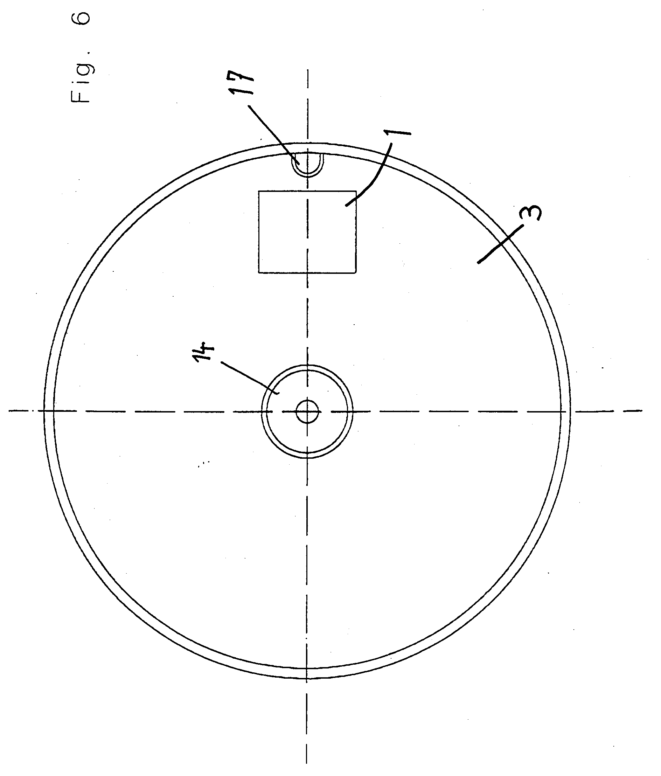

Im Deckel 3 ist auf einer Seite außermittig radial im Abstand von dem Greifknopf 14 ein Anzeigegerät 1 angebracht, welches zum Beispiel ein quaderförmige Gehäuse mit dieses überlappender Oberwand aufweist, so daß das Anzeigegerät 1 bei der hier gezeigten Ausführungsform von außen in einer Ausnehmung im Deckel eingesteckt und in dieser Position befestigt wird, zum Beispiel durch Klemmung, Klebung und dergleichen, so daß man bei Ansicht des Deckels 3 von innen gemäß Figur 6 auf den Boden des kastenförmigen Anzeigegerätes 1 blickt.

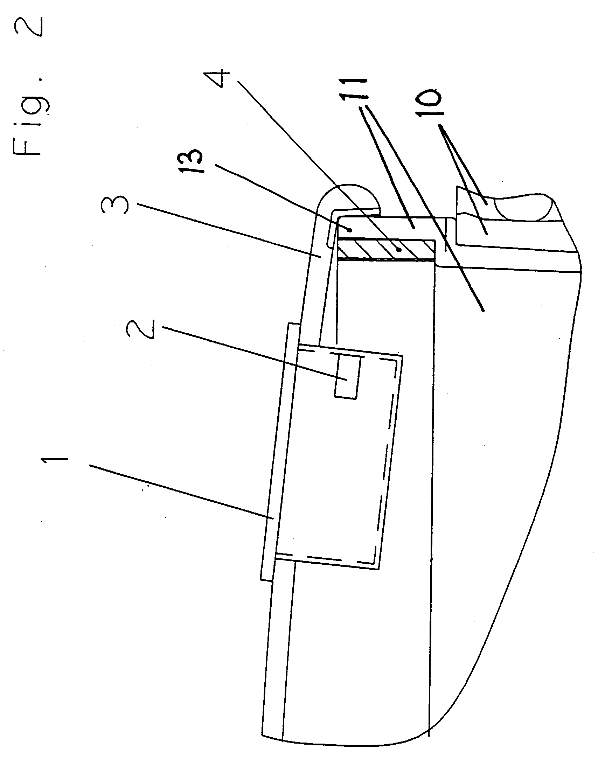

In dem Anzeigegerät 1 ist ein Reedschalter 2 an einer Seitenwand untergebracht, wie in Figur 2 angedeutet ist. Der nächstliegende Teil des oberen Randes 13 des Trichters 11 befindet sich etwa im Abstand von 10 mm neben dem Reedschalter 2.

Bei einer ersten Ausführungsform nach den Figuren 3, 4 und 6 ist der Deckel 3 mit einer Zentrierung 17 versehen, damit der Deckel 3 nur in einer solchen Position auf den Rand 13 des Trichters 11 aufgesetzt werden kann, daß der Abstand zwischen dem Reedschalter 2 des Anzeigegerätes 1 und einem stabförmigen Magnet 4 minimal ist, zum Beispiel 7 bis 10 mm. Dieser stabförmige Magnet 4 ist in den Figuren 2 bis 4 sichtbar. Er ist auf der unteren Schulter des Trichters 11 neben dessen Rand 13 befestigt.

Bei einer anderen Ausführungsform, die hier in den Figuren 1 und 2 sichtbar ist, hat der Magnet 4 die Form eines Bandes und erstreckt sich über den gesamten Umfang neben dem Rand 13 des Trichters 11. Bei dieser Ausführungsform ist eine Zentrierung nicht erforderlich, denn der Abstand zwischen dem Anzeigegerät 1 bzw. seinem Reedschalter 2 einerseits und dem Magnetband 4 andererseits ist immer der gleiche, wie man auch den Trichter 11 oder den Deckel 3 um die Mittelachse 18 herum zueinander dreht.

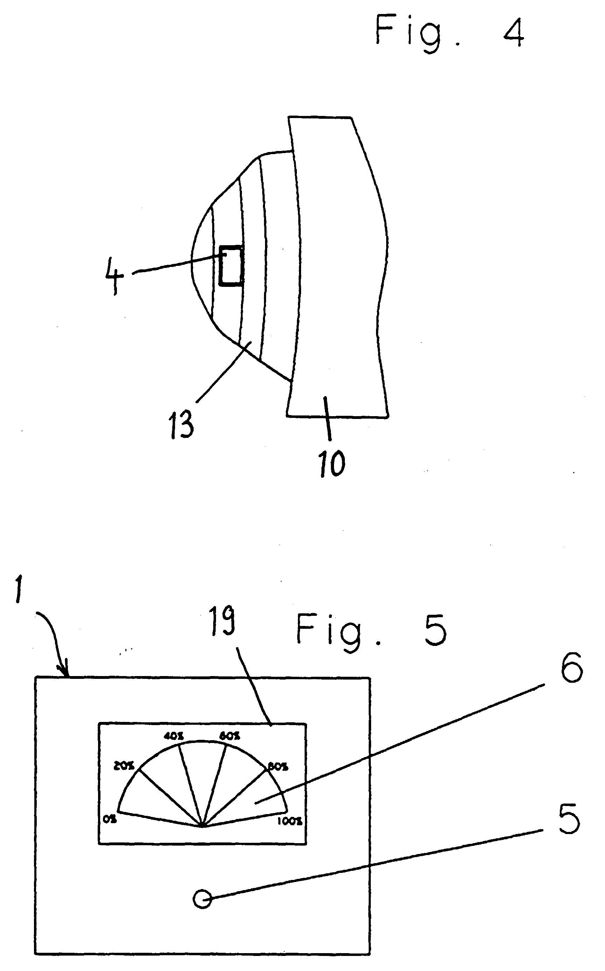

Blickt man von oben auf den Deckel 3, so sieht man radial im Abstand von dem Greifknopf 14 das Anzeigegerät 1, wie man in den Figuren 3 und 5 sieht. In einer rechteckigen Sichtscheibe 19 sieht man fünf segmentartige Anzeigefelder 6, deren jedes einen Anteil von 20% von insgesamt 100% zeigt. Jedes Anzeigefeld 6 ist separat vom anderen sichtbar zu machen. Beispielsweise kann die Sichtscheibe 19 leer erscheinen, oder es können ein oder mehrere Anzeigefelder gleichzeitig erscheinen oder auch blinken.

Unter der Sichtscheibe 19 sieht man eine Rücksetztaste 5, die durch ein spitzes Werkzeug, wie zum BeIspiel eine Kugelschreiberspitze, betätigt werden kann.

Bei einer speziellen Ausführungsform der Erfindung hat man in dem elektronischen Anzeigegerät 1 einen Chip eingebaut, in welchem herstellerseitig eine Menge von 140 Liter Wasser vorgegeben ist unter der Annahme, daß das Volumen des Trichters 11 bzw. des Wasserauffangbehälters 8 1 Liter beträgt. (Dabei versteht sich, daß in der Anzeige auch andere Literangaben vorgesehen sein können, welche dann einem anderen Trichtervolumen angepaßt sind.)

In dem Chip sind ferner für jedes segmentartige Anzeigefeld 6 eine bestimmte Zeitperiode, hier in dem Beispiel 11 Tage, vorgegeben, welche 20% der Erschöpfung entsprechen. Nach 55 Tagen würden alle Anzeigefelder sichtbar sein.

Beim Kauf einer Wasserreinigungsvorrichtung mit 1 Liter Volumen wird angenommen, daß der mit Reinigungsmittel gefüllte Einsatz entweder nach 55 Tagen oder nach Durchlauf von 140 Liter Wasser erschöpft ist.

Um das Gerät in Betrieb zu setzen, wird die Rücksetztaste betätigt. Dann wird die digitale Anzeige aktiviert. Es erscheinen hinter der Sichtscheibe 19 alle fünf segmentartigen Anzeigefelder eine Sekunde lang. Nachdem diese erloschen sind, erscheint in Figur 5 unten links die Anzeige "0%". Dies zeigt dem Kunden an, daß die Anzeige erfolgreich aktiviert wurde. Anschließend wird ob en rechts in der Anzeige durch ein dauerhaftes Blinksignal dem Endverbraucher angezeigt, daß das Gerät aktiviert ist.

Wird nur die Zeit gemessen, weil das Gerät beispielsweise nur mit geringen Mengen Flüssigkeit beschickt wird, dann erscheint nach 11 Tagen das erste Segment mit der Erschöpfungsangabe von 20%. Nach 22 Tagen erscheint das zweite Segment plus das erste Segment, so daß insgesamt eine Erschöpfung von 40% angegeben wird. Nach Ablauf von 55 Tagen erscheinen entsprechend alle fünf segmentartigen Anzeigefelder mit der Anzeige von 100%. Zusätzlich ist hier vorgesehen, daß 5,5 Tage vor Erreichen der letzten Zeitgrenze, d.h. vor Erreichen der 55 Tage, das letzte in Figur 4 am weitesten rechts angeordnete Segment zu blinken anfängt. Dieses Segment blinkt solange, bis die 55 Tage erreicht sind. Dann erscheint unten rechts die Anzeige "100%". Gleichzeitig blinken alle fünf segmentartige Anzeigefelder solange, bis der Kunde die Anzeige wieder neu aktiviert und vorher entsprechend den Herstellerempfehlungen den Wechsel des Einsatzes mit neuem Reinigungsmittel vorgenommen hat.

Betrachtet man umgekehrt einen Betrieb, bei welchem sehr viel Wasser in kürzester Zeit durch die Reinigungsvorrichtung strömt, so daß eine Wassermengenmessung im Vordergrund-steht, dann erscheinen ebenfalls die segmentartigen Anzeigefelder nacheinander. Entscheidend für deren Erscheinen ist aber der Schaltvorgang durch den Reedschalter 2. Dieser wird durch die Abstandsänderung des Reedschalters vom Magneten 4 erreicht. Es kann sich um runde Magneten mit einem Durchmesser von 3 bis 5 mm, eine Blättchenform mit einer Länge von 10 mm und einer Dicke von 1 mm oder um Bandform handeln, wie vorstehend schon beschrieben ist. Die besten Schaltergebnisse haben sich bei einer bevorzugten Ausführungsform mit Magnetband dann ergeben, wenn der Magnet einen Abstand vom Reedschalter in der Größe von 5 mm bis 10 mm hat. Je größer dieser Abstand wird, umso größer sollte dann der Magnet sein.

Zum Befüllen des Trichters 11 mit zu reinigendem Wasser wird der Deckel 3 abgehoben. Dies hat eine Vergrößerung des Abstandes zwischen Magnet 4 und Reedschalter 2 zur Folge. Nach anschließendem Aufsetzen des Deckels ist definitionsgemäß 1 Liter Wasser gezählt. Hat man auf diese Weise 28 Liter Wasser gezählt, dann erscheint das erste segmentartige Anzeigefeld und zeigt "20%" an. Fortschreitend erscheint dann ein Segment nach dem anderen, bis 140 Liter gemessen wurden und dann "100%" angezeigt werden.

Im allgemeinen wird aber kombiniert die Zeit einerseits und die Füllmenge Wasser andererseits gemessen. Werden bei diesem gemischten. Beispiel zum Beispiel innerhalb von 11 Tagen nur 25 Liter anstatt 28 Liter gefiltert, dann erscheint das erste Segment (nach der reinen Zeitzählung). Intern werden aber im Gerät die 25 Liter weitergezählt. Das nächste segmentartige Anzeigefeld erscheint, wenn entweder wiederum ein Zeitraum von 11 Tagen vorüber ist oder die erste Mengeneinheit gefüllt ist. Bei einer Durchlaufmenge von zum Beispiel 140 Liter ergibt sich bei einer Aufteilung auf fünf Segmente, daß ein Segment 28 Liter Wasser entspricht.

Werden jedoch innerhalb von 9 Tagen 32 Liter Wasser anstatt 28 Liter gefiltert, so erscheint ebenfalls wieder ein segmentartiges Anzeigefeld, obwohl die erste Zeiteinheit von 11 Tagen noch nicht erreicht wurde. In diesem Falle wurde die Volumenzählung der Zeitzählung vorgezogen.

Spätestens nach 55 Tagen oder spätestens nach 140 Litern, je nachdem, welche Zählung zuerst beendet ist, blinken alle Anzeigefelder in der beschriebenen Weise.

Die Auslösung des jeweiligen Schaltvorganges kann durch unterschiedliche Mittel erreicht werden. So ist es alternativ zu einem Magnet mit Reedschalter zum Beispiel möglich, eine Photozelle am Deckel oder einem am Deckel befestigten Teil anzubringen derart, daß durch Abnehmen des Deckels 3 vom oberen Rand 13 des Trichters 11 Licht auf die Photozelle trifft (deren Oberfläche heller beleuchtet wird), so daß nach einer bestimmten Zeitverzögerung, wenn der Deckel wieder gschlossen wird, der Schaltvorgang ausgelöst wird.

Man kann sich in Figur 2 die Anordnung der Photozelle anstelle des dort gezeigten Reedschalters 2 vorstellen, wobei der Magnet 4 gemäß Figur 2 überflüssig wird. Die Anordnung der Photozelle kann im Anzeigegerät integriert sein. Alternativ kann die Photozelle an einer beliebigen Stelle im Deckel angeordnet sein, zum Beispiel im Griff, auf der Oberseite des Deckels 3. Auf diese Weise kann man auch einen runden Deckel verwenden, und die Schalt- und Zählfunktion arbeitet zuverlässig und unabhängig von einer bestimmten Ausrichtung des Deckels bezüglich des Trichters 11. Als die bestimmte Zeitverzögerung hat man zum Beispiel 1 Sekunde vorgesehen. Durch eine Verzögerungsschaltung kann man diese bestimmte Zeit aber auch um das Zehnfache vergößern. Im Betrieb bedeutet das, daß die Photozelle nach Öffnen des Deckels 3 hell bestrahlt wird. Wenn dann in einer bestimmten, voreingestellten Zeit der Deckel wieder geschlossen wird, wird der Schaltvorgang ausgelöst.

### Bezugszeichenliste

- 1: Anzeigegerät
- 2: Reedschalter
- 3: Deckel
- 4: Magnet
- 5: Rücksetztaste
- 6: Anzeigefeld
- 7: Wasserreinigungsvorrichtung
- 8: Wasserauffangbehälter
- 9: Ausgießtülle
- 10: Griff
- 11: Trichter
- 12: Hülse
- 13: Trichterrand
- 14: Greifknopf
- 15: Klappe
- 16: Schwenkachse
- 17: Zentriermittel
- 18: Mittelachse
- 19: Sichtscheibe

## Patentansprüche

1. Einrichtung für die Anzeige der Erschöpfung eines in einem Einsatz einer Wasserreinigungsvorrichtung (7) enthaltenen Reinigungsmittels, **dadurch gekennzeichnet,** daß ein Anzeigegerät (1) angeordnet ist, um dem Verbraucher die Erschöpfung des Reinigungsmittels in Abhängigkeit von der Menge des durch das Reinigungsmittel durchgelaufenen Wassers anzuzeigen.

2. Einrichtung nach Anspruch 1, dadurch gekennzeichnet, daß ein Anzeigegerät (1) angeordnet ist, um dem Verbraucher die Erschöpfung des Reinigungsmittels in Abhängigkeit von der Menge des durch das Reinigungsmittel durchgelaufenen Wassers und von der Zeit anzuzeigen.

3. Einrichtung nach Anspruch 1 oder 2, dadurch gekennzeichnet, daß das Anzeigegerät (1) mit einer Anordnung verbunden ist, die an einem relativ zum Einsatz bewegbaren Teil (3) angebracht ist und bei dieser Bewegung einen Schaltvorgang auslöst.

4. Einrichtung nach einem der Ansprüche 1 bis 3, dadurch gekennzeichnet, daß die Anordnung in dem Anzeigegerät (1) integriert ist.

5. Einrichtung nach einem der Ansprüche 1 bis 4, dadurch gekennzeichnet, daß die Anordnung einen Reedschalter(2) aufweist und daß an dem mit dem Einsatz verbundenen Teil (3) ein Magnet (4) befestigt ist.

6. Einrichtung nach einem der Ansprüche 1 bis 5, dadurch gekennzeichnet, daß der Einsatz der Wasserreinigungsvorrichtung (7) an einem in einem Auffangbehälter (8) gestützten Trichter(11) gehalten ist, an welchem der Magnet (4) befestigt ist, und daß das Anzeigegerät (1) an dem Deckel (3) der Wasserreinigungsvorrichtung (7) angebracht ist.

7. Einrichtung nach einem der Ansprüche 1 bis 6, dadurch gekennzeichnet, daß der Magnet (4) sich in Form eines Bandes um den Umfang des den Deckel (3) tragenden Trichters (11) erstreckt.

8. Einrichtung nach einem der Ansprüche 1 bis 7, dadurch gekennzeichnet, daß der Deckel (3) und/oder der Trichter (11) ein Zentriermittel (17) aufweist und der Magnet (4) die Form eines Bolzens, Blättchens oder Quaders hat.

9. Einrichtung nach einem der Ansprüche 1 bis 8, dadurch gekennzeichnet, daß das Anzeigegerät (1) eine Sichtscheibe (19) mit mehreren, nebeneinander angeordneten Anzeigefeldern (5) und vorzugsweise eine Rücksetztaste (5) aufweist.

10. Einrichtung nach einem der Ansprüche 1 bis 9, dadurch gekennzeichnet, daß bei auf der Wasserreinigungsvorrichtung (7) aufgesetztem Deckel (3) der Magnet (4) von dem Reedschalter (2) einen Abstand von 1 mm bis 30 mm, vorzugsweise von 5 mm bis 10 mm, hat.
